# EUROPÄISCHE PATENTSCHRIFT

(11) **EP 4 222 527 B1**
(45) Veröffentlichungstag und Bekanntmachung des Hinweises auf die Patenterteilung: **15.04.2026**
(21) Anmeldenummer: 21786766.2
(22) Anmeldetag: 22.09.2021
(51) Int. Cl.: G01S 7/539, G01S 15/931

(54) **VERFAHREN ZUR CHARAKTERISIERUNG EINES OBJEKTS IN EINER UMGEBUNG EINES KRAFTFAHRZEUGS**
METHOD FOR CHARACTERISING AN OBJECT IN AN ENVIRONMENT OF A MOTOR VEHICLE
PROCÉDÉ DE CARACTÉRISATION D'UN OBJET DANS UN ENVIRONNEMENT D'UN VÉHICULE AUTOMOBILE

(30) Priorität: 30.09.2020 DE 102020212381
(43) Veröffentlichungstag der Anmeldung: 09.08.2023
(73) Patentinhaber: AUMOVIO Autonomous Mobility Germany GmbH, 85057 Ingolstadt (DE)
(72) Erfinder: KEKUD, Abhishek, 90411 Nürnberg (DE); ADAMS, Robin, 90411 Nürnberg (DE); KHAWATMI, Sahar, 90411 Nürnberg (DE); GLATZ, Nicolai, 90411 Nürnberg (DE)
(74) Vertreter: Aumovio Corporation
(86) Internationale Anmeldenummer: PCT/DE2021/200125
(87) Internationale Veröffentlichungsnummer: WO 2022/068999

(56) Entgegenhaltungen:
- DE-A1- 102005 044 050
- DE-A1- 102018 102 786
- DE-A1- 102018 103 560
- US-A1- 2008 111 733

## Beschreibung

Die Erfindung betrifft ein Verfahren zur Charakterisierung eines Objekts in einer Umgebung eines Kraftfahrzeugs mittels eines Assistenzsystems des Kraftfahrzeugs, bei welchem das Kraftfahrzeug relativ zu dem Objekt bewegt wird und mit einem Ultraschallsensor des Assistenzsystems Ultraschallsignale ausgesendet werden. Dabei werden Echos der von dem Objekt reflektierten Ultraschallsignale empfangen und es werden mittels einer Steuereinrichtung jeweilige Amplituden der empfangenen Echos bestimmt, wobei eine Klassifizierung einer Höhe des Objekts basierend auf den Amplituden ermittelt wird. Die Erfindung betrifft ferner ein Assistenzsystem mit einem Ultraschallsensor und einer Steuereinrichtung, welche zum Durchführen eines derartigen Verfahrens ausgelegt ist.

Ultraschallsensoren umfassen für üblicherweise eine Sendeeinrichtung, welche Ultraschallsignale aussendet, die sich in der Luft mit Schallgeschwindigkeit von etwa 340 Meter pro Sekunde fortpflanzt. Dazu wird gewöhnlich eine Membran des Ultraschallsensors mit einem entsprechenden Wandlerelement zu mechanischen Schwingungen angeregt. Das Ultraschallsignal wird an Objekten in der Umgebung als Echo reflektiert und von einer Empfängereinrichtung des Ultraschallsensors detektiert. Anhand der Laufzeitdifferenz zwischen dem Sendezeitpunkt und dem Empfangszeitpunkt kann unter Berücksichtigung der Ausbreitungsgeschwindigkeit des Ultraschallsignals der Abstand, oder anders ausgedrückt, die Entfernung zum Objekt bestimmt werden. Hierbei kann auch die Amplitude des reflektierten Ultraschallsignals bzw. des Echos ermittelt werden.

Üblicherweise werden Ultraschallsensoren für Kraftfahrzeuge zur Umfelderfassung in einem Bereich bis etwa 7 Meter eingesetzt. Besondere Bedeutung spielen Ultraschallsensoren insbesondere bei semi-automatischen oder automatischen Fahrmanövern, vor allem im Zusammenhang mit Parkanwendungen, etwa der Parkdistanzmessung, Parklückensuche oder beim Parken. Dabei wird das Kraftfahrzeug üblicherweise relativ zu den Objekten bewegt, wobei während des Bewegens zu vorbestimmten Zeitpunkten jeweils ein Messzyklus durchgeführt wird. Bei jedem Messzyklus wird dabei mit einem Ultraschallsensor ein Ultraschallsignal ausgesendet. Aus dem Stand der Technik sind bereits Verfahren und entsprechende Assistenzsysteme bekannt, welche dem Fahrer mithilfe von Ultraschallsensoren unterschiedliche Informationen über die Umgebung des Kraftfahrzeugs zur Verfügung stellen und ihn beim Manövrieren des Kraftfahrzeugs und insbesondere beim Lokalisieren einer Parklücke und beim Einparken des Kraftfahrzeugs in die Parklücke unterstützen. Es existieren beispielsweise Assistenzsysteme, die mit einer Parklückenlokalisierung ausgestattet sind und dem Fahrer anzeigen, ob in der unmittelbaren Umgebung des Kraftfahrzeugs eine Parklücke vorhanden ist bzw. ob eine vorhandene Parklücke groß genug ist, um das Kraftfahrzeug darin parken zu können. Derartige Assistenzsystem benötigen zur sicheren Lokalisierung und Abmessung einer Parklücke Informationen über sich in der Umgebung des Kraftfahrzeugs befindliche Objekte, die beispielsweise durch parkende Fahrzeuge, Bordseine, Wände und Mauern gebildet sein können.

Neben der Entfernung des Kraftfahrzeugs zu einem Objekt ist üblicherweise auch die Höhe des Objekts von Bedeutung. Die Höhe ist ein wichtiger Faktor, um entscheiden zu können, ob ein Objekt beziehungsweise Hindernis überfahren werden kann oder nicht. Insbesondere wenn das Kraftfahrzeug auf Grundlage der Messungen eines Ultraschallsensors zumindest semi-autonom manövriert wird, ist es wünschenswert, die Höhe des erfassten Objekts zu bestimmen.

Die Höhenbestimmung mit im Kraftfahrzeugbereich regelmäßig verwendeten eindimensionalen (1D) Ultraschallsensoren, also Ultraschallsensoren zur Entfernungsbestimmung, ist aufgrund physikalischer Einschränkungen grundsätzlich recht schwierig. Mithilfe eines solchen Ultraschallsensors kann die Höhe eines Objekts nicht direkt gemessen werden. Zur Höhenbestimmung wird daher beispielsweise zusätzlich eine Kamera verwendet und die Höhe basierend auf einem 2D-Bild geschätzt oder es wird eine auf mehreren Sensoren basierende Methode zur Abschätzung der Höhe auf Grundlage von Triangulation verwendet. Auf einer Kamera bzw. mehreren Sensoren basierende Verfahren nutzen dabei allerdings nicht die Vorteile eines 1D-Ultraschallsensors hinsichtlich Kosten und Robustheit aus.

Ein Verfahren und ein Assistenzsystem der eingangs genannten Art sind beispielsweise aus der DE 10 2004 047 479 A1 bekannt. Dabei werden zur Klassifizierung einer Höhe eines Objekts bei einer Vorbeifahrt eines Kraftfahrzeugs an dem seitlich von dem Kraftfahrzeug befindlichen Objekt mittels eines Ultraschallsensors des Kraftfahrzeugs Ultraschallsignale ausgesendet und die Echos der von den Objekten reflektierten Ultraschallsignale empfangen. Basierend auf einer Amplitude eines empfangenen Echos wird die Klassifizierung der Höhe des Objekts bestimmt. DE 10 2018 102 786 A1, DE 10 2005 044 050 A1, DE 10 2018 103 560 A1 beziehen sich auf die Klassifizierung der Höhe von Objekten in der Umgebung eines Fahrzeugs unter Verwendung von Ultraschallsensoren. US 2008/111733 A1 beschreibt ein Radar zur Erkennung niedriger Objekte.

Der vorliegenden Erfindung liegt die Aufgabe zugrunde, ein alternatives Verfahren zur Charakterisierung eines Objekts in einer Umgebung eines Kraftfahrzeugs sowie ein entsprechendes Assistenzsystem anzugeben, welches eine möglichst kostengünstige und dabei zuverlässige Klassifizierung der Höhe des Objekts ermöglicht.

Die vorstehende Aufgabe wird durch die gesamte Lehre des Anspruchs 1 sowie des nebengeordneten Anspruchs 13 gelöst. Zweckmäßige Ausführungsformen und Weiterbildungen der Erfindung sind in den Unteransprüchen und der nachfolgenden Beschreibung dargelegt.

Bei dem erfindungsgemäßen Verfahren zur Charakterisierung eines Objekts in einer Umgebung eines Kraftfahrzeugs mittels eines Assistenzsystems des Kraftfahrzeugs, wird das Kraftfahrzeug relativ zu dem Objekt bewegt wird und es werden mit einem Ultraschallsensor, insbesondere einem 1D-Ultraschallsensor, des Assistenzsystems Ultraschallsignale ausgesendet. Dabei werden Echos der von dem Objekt reflektierten Ultraschallsignale empfangen, wobei mittels einer Steuereinrichtung jeweilige Amplituden der empfangenen Echos bestimmt werden, und wobei eine Klassifizierung einer Höhe des Objekts basierend auf den Amplituden ermittelt wird.

Erfindungsgemäße wird die Klassifizierung der Höhe des Objekts anhand einer ermittelten ersten Amplitudenänderung durch Vergleichen einer ersten Amplitude eines ersten Echos mit einer zweiten Amplitude eines zweiten Echos, das nach dem ersten Echo empfangen wurde, ermittelt. Gemäß der Erfindung wird ferner die Klassifizierung der Höhe des Objekts anhand eines Vergleichs der ersten Amplitudenänderung mit einer zweiten Amplitudenänderung ermittelt, wobei die zweite Amplitudenänderung durch Vergleichen einer dritten Amplitude eines dritten Echos, das nach dem zweiten Echo empfangen wurde, mit der zweiten Amplitude des zweiten Echos oder mit einer vierten Amplitude eines vierten Echos, das nach dem zweiten Echo und vor dem dritten Echo empfangen wurde, ermittelt wird.

Die Erfindung geht dabei zunächst von der Überlegung aus, dass eine kostengünstige Klassifizierung der Höhe eines Objekts ermöglicht wird, wenn dabei auf einen Sensor des Kraftfahrzeugs zurückgegriffen wird, der ohnehin verbaut ist, und dass eine besonders kostengünstige und robuste Klassifizierung weiter dadurch gefördert wird, dass kein weiterer Sensor, oder genauer, keine weitere Sensorart, insbesondere keine Kamera, und keine damit verbundene rechnerisch aufwändige und störanfällige Fusion der entsprechenden Sensordaten verwendet werden. Weiter geht die Erfindung von der Überlegung aus, dass das Strahlungsmuster eines Ultraschallsensors grundsätzlich eine Funktion des Höhenwinkels ist, dass also die Leistung eines Ultraschallsignals, das von einem Ultraschallsensor an ein Objekt im Erfassungsbereich ausgesendet wird, vom Höhenwinkel abhängt. Bei einem Objekt, das sich auf einer Höhe befindet, also insbesondere eine Höhe aufweist, die geringer ist als die Einbauhöhe des Ultraschallsensors im Kraftfahrzeug ändern sich, insbesondere unterhalb einer gewissen Entfernung zwischen Objekt und Kraftfahrzeug, genauer gesagt, Ultraschallsensor, folglich der Höhenwinkel und damit die Leistung, oder anders gesagt, die Amplitude des reflektierten Ultraschallsignals in Abhängigkeit der Entfernung zwischen Kraftfahrzeug bzw. Ultraschallsensor und Objekt. Diese Tatsache kann zur Ermittlung der Klassifizierung der Höhe eines Objekts genutzt werden.

Daher sieht die Erfindung vor, die Klassifizierung der Höhe des Objekts allein basierend auf den Sensordaten eines sich relativ zum Objekt bewegenden Ultraschallsensors, insbesondere eines 1D-Ultraschallsensors, anhand einer ermittelten ersten Amplitudenänderung durch Vergleichen einer ersten Amplitude eines ersten Echos mit einer zweiten Amplitude eines zweiten Echos, das nach dem ersten Echo empfangen wurde, ermittelt wird.

Die erfindungsgemäße Ausgestaltung hat den Vorteil, dass dadurch ein Verfahren bereitgestellt wird, mittels dem eine kostengünstige und dabei zuverlässige Klassifizierung der Höhe des Objekts ermöglicht ist.

Bei den zu charakterisierenden Objekten kann es Objekte handeln, die sich von einem Boden, beispielsweise einer Fahrbahnoberfläche oder einem sonstigen Gelände, aus erstrecken und sich im Wesentlichen orthogonal zum Boden erstrecken. Es kann sich aber auch um Objekte handeln, die sich nicht vom Boden aus erstrecken, wie beispielsweise eine Querlatte eines Zauns, oder die sich nicht orthogonal zum Boden erstrecken, wie beispielsweise eine Rampe.

Der Ultraschallsensor, insbesondere ein 1D-Ultraschallsensor, kann beispielsweise in oder hinter einem Stoßfänger des Kraftfahrzeugs angeordnet sein. Alternativ dazu kann der Ultraschallsensor, insbesondere ein 1D-Ultraschallsensor, in oder hinter einem Karosseriebauteil, beispielsweise einer Tür des Kraftfahrzeugs angeordnet sein.

Es kann sowohl nur ein einziger Ultraschallsensor, insbesondere ein 1D-Ultraschallsensor, verwendet werden. Alternativ können aber auch mehrere Ultraschallsensoren, insbesondere mehrere 1D-Ultraschallsensoren, verwendet werden.

In einer vorteilhaften Ausführungsform handelt es sich bei dem ersten Echo und dem zweiten Echo um zeitlich aufeinanderfolgende Echos.

Als Klassifizierung der Höhe des Objekts werden insbesondere die zwei Klassen "hoch" und "niedrig" verwendet. Dabei wird das Objekt als "hoch" klassifiziert, sofern sich das Objekt mindestens auf der Einbauhöhe des Ultraschallsensors befindet, sofern das Objekt also insbesondere eine Höhe aufweist, die mindestens der Einbauhöhe des Ultraschallsensors entspricht. Das Objekt wird als "niedrig" klassifiziert, wenn sich das Objekt unterhalb der Einbauhöhe des Ultraschallsensors befindet, wenn das Objekt also insbesondere eine Höhe aufweist, die geringer als die Einbauhöhe des Ultraschallsensors ist.

In einer weiteren vorteilhaften Ausführungsform befindet sich das Objekt in einem Nahbereich des Kraftfahrzeugs, vorzugsweise in einer Entfernung von bis zu zwei Metern zum Ultraschallsensor des Kraftfahrzeugs, wobei bei einer Annäherung des Kraftfahrzeugs an das Objekt das Objekt als niedrig klassifiziert wird, falls als erste Amplitudenänderung eine Amplitudenabnahme im zeitlichen Verlauf ermittelt wird, und wobei das Objekt als hoch klassifiziert wird, falls als erste Amplitudenänderung eine Amplitudenzunahme im zeitlichen Verlauf ermittelt wird. Die Klassifizierung als niedrig wird dabei insbesondere für ein Objekt ermittelt, das sich unterhalb der Einbauhöhe des Ultraschallsensors befindet, das also insbesondere eine Höhe aufweist, die geringer als die Einbauhöhe des Ultraschallsensors ist. Ein solches Objekt ist beispielsweise ein Bordstein. Die Klassifizierung als hoch wird insbesondere für ein Objekt ermittelt, das sich mindestens auf der Einbauhöhe des Ultraschallsensors befindet, das also insbesondere eine Höhe aufweist, die mindestens der Einbauhöhe des Ultraschallsensors entspricht. Ein solches Objekt ist beispielsweise eine Mauer, ein Zaun oder ein Fahrzeug.

Dies basiert darauf, dass bei einem Objekt, das sich mindestens auf der Einbauhöhe des Ultraschallsensors befindet, sich der Höhenwinkel nicht ändert, während sich das Kraftfahrzeug bzw. der Ultraschallsensor auf das Objekt zubewegt. Somit hängt die Leistung, oder anders gesagt, die Amplitude des reflektierten Ultraschallsignals bzw. Echos lediglich von der Entfernung zwischen dem Objekt und dem Ultraschallsensor ab. Dabei wird die Amplitude des reflektierten Ultraschallsignals größer, wenn sich das Kraftfahrzeug, genauer gesagt, der Ultraschallsensor einem solchen Objekt nähert, wenn also die Entfernung zwischen dem Objekt und dem Ultraschallsensor kleiner wird. Bei einem Objekt, das sich unterhalb der Einbauhöhe des Ultraschallsensors befindet, ändert sich dagegen unterhalb einer bestimmten Entfernung zwischen Objekt und Ultraschallsensor der Höhenwinkel und nimmt immer weiter ab, während sich das Kraftfahrzeug bzw. der Ultraschallsensor auf das Objekt zubewegt. Dabei wird die Amplitude des reflektierten Ultraschallsignals kleiner, wenn sich das Kraftfahrzeug bzw. der Ultraschallsensor einem solchen Objekt nähert. Zwar wird an sich die Amplitude größer, je kleiner die Entfernung zwischen Objekt und Ultraschallsensor wird. Allerdings wird demgegenüber hier der Faktor dominant, dass mit abnehmender Entfernung der Höhenwinkel kleiner wird, wodurch folglich die Amplitude des reflektierten Ultraschallsignals insgesamt abnimmt.

Gemäß der Erfindung werden also zwei Amplitudenänderungen miteinander verglichen, wodurch die Robustheit der Klassifizierung der Höhe des Objekts weiter gefördert wird.

Dabei wird in einer weiteren vorteilhaften Ausführungsform bei einer Annäherung des Kraftfahrzeugs an das Objekt das Objekt als niedrig klassifiziert wird, falls als erste Amplitudenänderung eine Amplitudenzunahme im zeitlichen Verlauf und als zweite Amplitudenänderung eine Amplitudenabnahme im zeitlichen Verlauf ermittelt wird.

Dies basiert darauf, dass bei einem Objekt, wie beispielsweise einem Bordstein, das sich unterhalb der Einbauhöhe des Ultraschallsensors befindet, das also insbesondere eine Höhe aufweist, die geringer als die Einbauhöhe des Ultraschallsensors ist, wenn sich dieses Objekt insbesondere noch nicht im Nahbereich des Kraftfahrzeugs befindet, vorzugsweise in einer Entfernung größer als zwei Meter zum Ultraschallsensor des Kraftfahrzeugs, der Höhenwinkel bei zumindest annähernd 90° liegt. Hier hängt folglich die Leistung, oder anders gesagt, die Amplitude des reflektierten Ultraschallsignals im Wesentlichen lediglich von der Entfernung zwischen dem Objekt und dem Ultraschallsensor ab. Dabei wird die Amplitude des reflektierten Ultraschallsignals bzw. Echos zunächst größer, wenn sich das Kraftfahrzeug bzw. der Ultraschallsensor einem solchen Objekt nähert, wenn also die Entfernung zwischen dem Objekt und dem Ultraschallsensor kleiner wird. Die erste Amplitudenänderung ergibt hier also eine Amplitudenzunahme im zeitlichen Verlauf. Wenn sich das Kraftfahrzeug bzw. der Ultraschallsensor dem Objekt weiter nähert und sich das Objekt dann insbesondere in dem Nahbereich des Kraftfahrzeugs befindet, vorzugsweise in einer Entfernung unterhalb von zwei Metern zum Ultraschallsensor des Kraftfahrzeugs, so ändert sich bei einer weiteren Annäherung der Höhenwinkel, wobei dieser kleiner 90° wird und sich bei weiterer Annäherung bzw. Verkleinerung der Entfernung sukzessive weiter verkleinert. Dies führt dazu, dass mit der weiteren Annäherung auch die Amplitude des reflektierten Ultraschallsignals sukzessive abnimmt. Zwar wird an sich die Amplitude größer, je kleiner die Entfernung zwischen Objekt und Ultraschallsensor wird. Allerdings wird demgegenüber hier der Faktor dominant, dass mit abnehmender Entfernung der Höhenwinkel kleiner wird, wodurch folglich die Amplitude des reflektierten Ultraschallsignals insgesamt abnimmt. Die zweite Amplitudenänderung ergibt hier also eine Amplitudenabnahme im zeitlichen Verlauf. Wenn sich also basierend auf dem Vergleich der ersten Amplitudenänderung mit der zweiten Amplitudenänderung ergibt, dass als erste Amplitudenänderung eine Amplitudenzunahme im zeitlichen Verlauf und als zweite Amplitudenänderung eine Amplitudenabnahme im zeitlichen Verlauf ermittelt wurde, so wird das Objekt als niedrig klassifiziert.

In einer weiteren vorteilhaften Ausführungsform befindet sich das Objekt in einem Nahbereich des Kraftfahrzeugs, vorzugsweise in einer Entfernung von bis zu zwei Metern zum Ultraschallsensor des Kraftfahrzeugs, wobei bei einer Annäherung des Kraftfahrzeugs an das Objekt das Objekt als niedrig klassifiziert wird, falls als erste Amplitudenänderung und als zweite Amplitudenänderung jeweils eine Amplitudenabnahme im zeitlichen Verlauf ermittelt wird, und falls zusätzlich die zweite Amplitudenänderung größer ist als die erste Amplitudenänderung. Es wird hier also ein Maß der Amplitudenabnahme berücksichtigt.

Dies basiert darauf, dass bei einem Objekt, wie beispielsweise einem Bordstein, das sich unterhalb der Einbauhöhe des Ultraschallsensors befindet, das also insbesondere eine Höhe aufweist, die geringer als die Einbauhöhe des Ultraschallsensors ist, wenn sich dieses Objekt im Nahbereich des Kraftfahrzeugs befindet, vorzugsweise in einer Entfernung kleiner als zwei Meter zum Ultraschallsensor des Kraftfahrzeugs, der Höhenwinkel sukzessive abnimmt, während sich das Kraftfahrzeug bzw. der Ultraschallsensor weiter auf das Objekt zubewegt. Dies führt dazu, dass mit der Annäherung auch die Amplitude des reflektierten Ultraschallsignals bzw. Echos sukzessive abnimmt. Zwar wird an sich die Amplitude größer, je kleiner die Entfernung zwischen Objekt und Ultraschallsensor wird. Allerdings wird demgegenüber hier der Faktor dominant, dass mit abnehmender Entfernung der Höhenwinkel kleiner wird, wodurch folglich die Amplitude des reflektierten Ultraschallsignals insgesamt abnimmt. Die zweite Amplitudenänderung ergibt hier also eine Amplitudenabnahme im zeitlichen Verlauf, welche größer ist, als die Amplitudenabnahme der ersten Amplitudenänderung, wodurch das Objekt als niedrig klassifiziert wird.

In einer weiteren vorteilhaften Ausführungsform befindet sich das Objekt in einem Nahbereich des Kraftfahrzeugs, vorzugsweise in einer Entfernung von bis zu zwei Metern zum Ultraschallsensor des Kraftfahrzeugs, wobei bei einer Annäherung des Kraftfahrzeugs an das Objekt das Objekt als hoch klassifiziert wird, falls als erste Amplitudenänderung und als zweite Amplitudenänderung jeweils eine Amplitudenzunahme im zeitlichen Verlauf ermittelt wird, und falls zusätzlich die zweite Amplitudenänderung größer ist als die erste Amplitudenänderung. Es wird hier also ein Maß der Amplitudenzunahme berücksichtigt.

Dies basiert darauf, dass bei einem Objekt, wie beispielsweise einer Mauer, einem Zaun oder einem Fahrzeug, das sich mindestens auf der Einbauhöhe des Ultraschallsensors befindet, das also insbesondere eine Höhe aufweist, die mindestens der Einbauhöhe des Ultraschallsensors entspricht, auch wenn sich dieses Objekt im Nahbereich des Kraftfahrzeugs befindet, vorzugsweise in einer Entfernung kleiner als zwei Meter zum Ultraschallsensor des Kraftfahrzeugs, sich der Höhenwinkel nicht ändert, während sich das Kraftfahrzeug bzw. der Ultraschallsensor auf das Objekt zubewegt. Somit hängt die Leistung, genauer, die Amplitude des reflektierten Ultraschallsignals lediglich von der Entfernung zwischen dem Objekt und dem Ultraschallsensor ab. Dabei wird die Amplitude des reflektierten Ultraschallsignals bzw. Echos größer, wenn sich das Kraftfahrzeug bzw. der Ultraschallsensor einem solchen Objekt nähert, wenn also die Entfernung zwischen dem Objekt und dem Ultraschallsensor kleiner wird. Die zweite Amplitudenänderung ergibt hier also eine Amplitudenzunahme im zeitlichen Verlauf, welche größer ist, als die Amplitudenzunahme der ersten Amplitudenänderung, wodurch das Objekt als hoch klassifiziert wird.

In einer weiteren vorteilhaften Ausführungsform wird die Klassifizierung der Höhe des Objekts ermittelt, wenn zusätzlich die erste Amplitudenänderung betragsmäßig oberhalb eines vorgegebenen Schwellenwerts liegt. Auf diese Weise wird die Zuverlässigkeit der Ermittlung der Klassifizierung der Höhe des Objekts weiter gesteigert. In einer Ausführungsform, in der zusätzlich oder alternativ die zweite Amplitudenänderung berücksichtigt wird, wird vorzugsweise die Klassifizierung der Höhe des Objekts ermittelt, wenn zusätzlich oder alternativ die zweite Amplitudenänderung betragsmäßig oberhalb eines vorgegebenen Schwellenwerts liegt.

Dabei wird in einer weiteren vorteilhaften Ausführungsform der Schwellenwert vorbestimmt in Abhängigkeit von einer aktuellen Geschwindigkeit des Kraftfahrzeugs und/oder einer Temperatur in der Umgebung des Kraftfahrzeugs und/oder einer Luftfeuchtigkeit in der Umgebung des Kraftfahrzeugs und/oder einer Einbauhöhe des Ultraschallsensors an dem Kraftfahrzeug. Da die Temperatur und in der Umgebung des Kraftfahrzeugs merkliche Auswirkungen auf die Luftschalldämpfung hat, kann die Temperatur mithilfe eines entsprechenden Sensors erfasst und der Schwellenwert daran angepasst werden. Entsprechendes gilt für die Luftfeuchtigkeit. Dies führt zu einer noch zuverlässigeren Klassifizierung der Höhe des Objekts.

In einer weiteren vorteilhaften Ausführungsform basiert der Vergleich der Amplituden auf einer Differenz und/oder einem Verhältnis der Amplituden.

In einer weiteren vorteilhaften Ausführungsform basiert der Vergleich der Amplitudenänderungen auf einer Differenz und/oder einem Verhältnis der Amplitudenänderungen.

In einer weiteren vorteilhaften Ausführungsform wird das Verfahren bei einem assistierten und/oder semi-automatischen und/oder automatischen Einparkverfahren angewendet.

In einer weiteren vorteilhaften Ausführungsform basiert die Klassifizierung der Höhe des Objekts ausschließlich auf Sensordaten des Ultraschallsensors. Es wird also insbesondere keine weitere Sensorart, wie beispielsweise eine Kamera oder ein Radarsensor zur Ermittlung der Klassifizierung der Höhe herangezogen.

Ferner umfasst die vorliegende Erfindung ein Assistenzsystem mit einem Ultraschallsensor und einer Steuereinrichtung. Dabei ist die Steuereinrichtung zum Durchführen des erfindungsgemäßen Verfahrens ausgelegt.

Die für das erfindungsgemäße Verfahren beschriebenen Vorteile und bevorzugten Ausführungsformen gelten entsprechend auch für das erfindungsgemäße Assistenzsystem.

Ausführungsbeispiele der Erfindung werden im Folgenden anhand einer Zeichnung näher erläutert. Darin zeigen:
- Fig. 1: ein Strahlungsdiagramm, das ein Strahlungsmuster eines Ultraschallsensors in Abhängigkeit vom Höhenwinkel darstellt,
- Fig. 2: ein Diagramm, das den Höhenwinkel als Funktion der Entfernung des Ultraschallsensors gemäß Fig. 1 von einem Objekt darstellt, und
- Fig. 3: ein Ablaufdiagramm eines Verfahrens zur Charakterisierung eines Objekts in einer Umgebung eines Kraftfahrzeugs.

Einander entsprechende Teile sind in allen Figuren stets mit gleichen Bezugszeichen versehen.

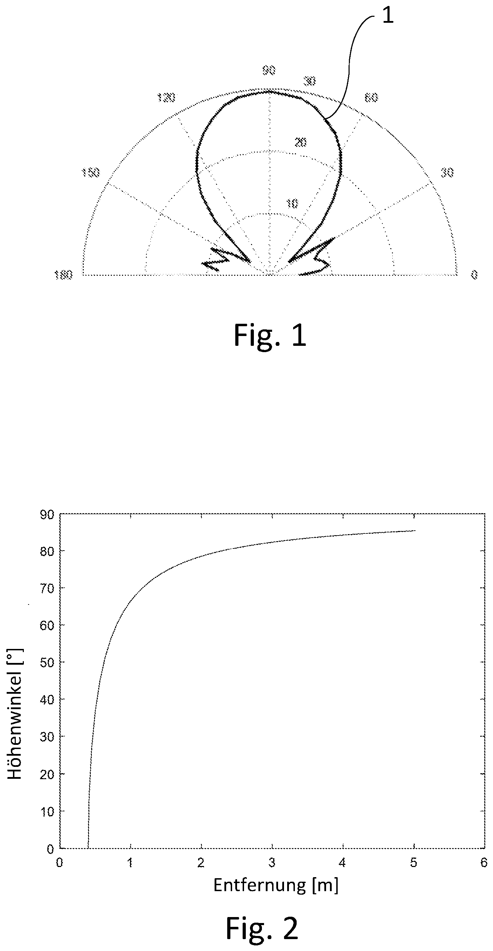

In Fig. 1 ist ein Strahlungsdiagramm gezeigt, das ein Strahlungsmuster 1 eines Ultraschallsensors in Abhängigkeit vom Höhenwinkel darstellt. Daraus ist ersichtlich, dass das Strahlungsmuster 1 des Ultraschallsensors eine Funktion des Höhenwinkels ist, dass also die Leistung eines Ultraschallsignals, das von einem Ultraschallsensor an ein Objekt im Erfassungsbereich ausgesendet wird, vom Höhenwinkel abhängt.

Wenn sich ein Objekt in einem Höhenwinkel von 90°, d.h. mindestens auf einer Einbauhöhe des Ultraschallsensors in einem Kraftfahrzeug, befindet, dann ändert sich der Höhenwinkel nicht, wenn sich das Kraftfahrzeug, genauer gesagt, der Ultraschallsensor dem Objekt nähert. Die Leistung, oder anders gesagt, die Amplitude des reflektierten Ultraschallsignals bzw. Echos hängt nur von der Entfernung zwischen Ultraschallsensor und Objekt ab. Daher wird die Amplitude des reflektierten Ultraschallsignals sukzessive größer, wenn sich das Kraftfahrzeug bzw. der Ultraschallsensor einem hohen Objekt nähert.

Bei einem Objekt, das eine Höhe aufweist, die geringer ist als die Einbauhöhe des Ultraschallsensors im Kraftfahrzeug ändern sich folglich der Höhenwinkel und damit die Leistung bzw. Amplitude des reflektierten Ultraschallsignal in Abhängigkeit der Entfernung zwischen Kraftfahrzeug bzw. Ultraschallsensor und Objekt. Bei einer Annäherung des Kraftfahrzeugs bzw. Ultraschallsensors an das Objekt wird der Höhenwinkel nämlich sukzessive kleiner bis er annähernd 0° erreicht, sobald sich der Ultraschallsensor unmittelbar am Objekt befindet.

Fig. 2 zeigt ein Diagramm, das den Höhenwinkel als Funktion der Entfernung des Ultraschallsensors gemäß Fig. 1 von einem Objekt darstellt. Dabei weist das Objekt eine Höhe auf, die 40 cm geringer ist als die Einbauhöhe des Ultraschallsensors im Kraftfahrzeug. Das Objekt ist hier als Bordstein ausgebildet.

Aus dem Diagramm ist ersichtlich, dass, wenn sich das Objekt noch nicht im Nahbereich des Kraftfahrzeugs befindet, insbesondere in einer Entfernung größer als zwei Meter zum Ultraschallsensor des Kraftfahrzeugs, der Höhenwinkel bei annähernd 90° liegt. In diesem Bereich hängt folglich die Leistung, genauer, die Amplitude des reflektierten Ultraschallsignals im Wesentlichen lediglich von der Entfernung zwischen dem Objekt und dem Ultraschallsensor ab. Dabei wird die Amplitude des reflektierten Ultraschallsignals größer, wenn sich das Kraftfahrzeug bzw. der Ultraschallsensor einem solchen Objekt nähert, wenn also die Entfernung zwischen dem Objekt und dem Ultraschallsensor kleiner wird.

Wenn sich das Kraftfahrzeug bzw. der Ultraschallsensor dem Objekt weiter nähert und sich das Objekt dann in dem Nahbereich des Kraftfahrzeugs befindet, insbesondere in einer Entfernung kleiner als zwei Meter zum Ultraschallsensor des Kraftfahrzeugs, so verkleinert sich sukzessive bei einer weiteren Annäherung der Höhenwinkel merklich. Dies führt dazu, dass mit der weiteren Annäherung auch die Amplitude des reflektierten Ultraschallsignals sukzessive abnimmt. Zwar wird an sich die Amplitude größer, je kleiner die Entfernung zwischen Objekt und Ultraschallsensor wird. Allerdings wird demgegenüber hier der Faktor dominant, dass mit abnehmender Entfernung der Höhenwinkel kleiner wird, wodurch folglich die Amplitude des reflektierten Ultraschallsignals insgesamt abnimmt.

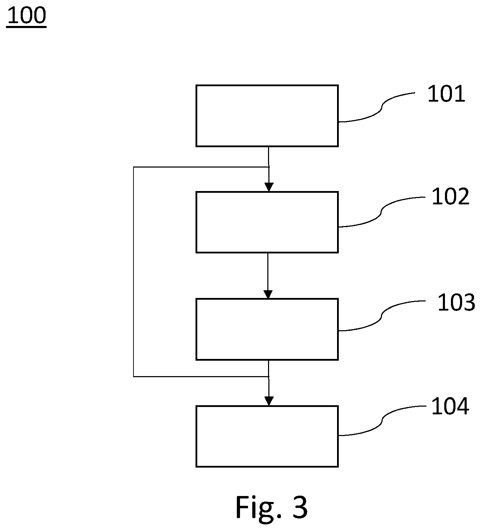

Fig. 3 ein Ablaufdiagramm eines Verfahrens 100 zur Charakterisierung eines Objekts in einer Umgebung eines Kraftfahrzeugs. Das Kraftfahrzeug umfasst dabei ein Assistenzsystem mit einer Steuereinrichtung und einem 1D-Ultraschallsensor, welcher an einem vorderen Stoßfänger des Kraftfahrzeugs angeordnet ist, und welcher ein Strahlungsmuster gemäß Fig. 1 aufweist. Das Kraftfahrzeug nähert sich dabei aus einer Entfernung von etwa 2,5 Metern mit seiner Front dem Objekt weiter an und der Ultraschallsensor sendet dabei fortwährend Ultraschallsignale aus. Bei dem Objekt handelt es sich um einen Bordstein, welcher eine Höhe aufweist, die etwa 40 cm geringer ist, als die Einbauhöhe des Ultraschallsensors im Kraftfahrzeug.

In einem Schritt 101 wird ein erstes Echo empfangen und es wird eine erste Amplitude des ersten Echos bestimmt.

In einem anschließenden Schritt 102 wird ein dem ersten Echo zeitlich folgendes zweites Echo empfangen und es wird eine zweite Amplitude des zweiten Echos bestimmt.

In einem Schritt 103 wird eine erste Amplitudenänderung ermittelt anhand eines Vergleichs der ersten Amplitude mit der zweiten Amplitude. Im vorliegenden Fall wird dabei eine Amplitudenzunahme ermittelt. Da sich das Objekt zum Zeitpunkt der Messung noch nicht im Nahbereich des Kraftfahrzeugs befindet, also noch in einer Entfernung größer als zwei Meter zum Ultraschallsensor des Kraftfahrzeugs, liegt der Höhenwinkel bei annähernd 90°. Hier hängt folglich die Leistung, genauer, die Amplitude des reflektierten Ultraschallsignals im Wesentlichen lediglich von der Entfernung zwischen dem Objekt und dem Ultraschallsensor ab. Dabei wird die Amplitude des reflektierten Ultraschallsignals also größer, wenn sich das Kraftfahrzeug bzw. der Ultraschallsensor einem solchen Objekt nähert, wenn also die Entfernung dem Objekt und dem Ultraschallsensor kleiner wird. Die erste Amplitudenänderung ergibt hier also eine Amplitudenzunahme im zeitlichen Verlauf.

Da sich das Objekt zum Zeitpunkt der Messung noch nicht im Nahbereich des Kraftfahrzeugs befand, findet basierend auf der ermittelten Amplitudenänderung noch keine finale Klassifizierung der Höhe des Objekts statt und das Verfahren 100 geht zurück zu Schritt 102. Es wird somit weiteres, zeitlich dem zweiten Echo folgendes drittes Echo empfangen und es wird eine dritte Amplitude des dritten Echos bestimmt.

Anschließend wird im Schritt 103 wird eine zweite Amplitudenänderung ermittelt anhand eines Vergleichs der zweiten Amplitude mit der dritten Amplitude. Da sich das Kraftfahrzeug in der Zwischenzeit weiter in Richtung Objekt fortbewegt hat und sich zum Zeitpunkt der weiteren Messung das Objekt nun im Nahbereich des Kraftfahrzeugs und hier konkret in einer Entfernung von 0,5 Metern zum Kraftfahrzeug bzw. Ultraschallsensor befindet, wird als zweite Amplitudenänderung eine Amplitudenabnahme ermittelt. Dies beruht darauf, dass der Höhenwinkel in diesem Bereich nun wesentlich kleiner als 90° ist, was dazu führt, dass die Amplitude des reflektierten Ultraschallsignals insgesamt abgenommen hat, wodurch die dritte Amplitude des dritten Echos kleiner ist als die zweite Amplitude des zweiten Echos. Die zweite Amplitudenänderung ergibt hier also eine Amplitudenabnahme im zeitlichen Verlauf.

In einem Schritt 104 wird eine Klassifizierung der Höhe des Objekts ermittelt. Hierzu findet ein Vergleich der ersten Amplitudenänderung mit der zweiten Amplitudenänderung statt. Da im vorliegenden Fall als erste Amplitudenänderung eine Amplitudenzunahme im zeitlichen Verlauf und als zweite Amplitudenänderung eine Amplitudenabnahme im zeitlichen Verlauf ermittelt wird, wird das Objekt als niedrig klassifiziert.

Basierend auf diesem Verfahren 100 kann die Höhe des Objekts, im vorliegenden Fall des Bordsteins, auf kostengünstige und zuverlässige Weise klassifiziert werden.

## Patentansprüche

1. Verfahren (100) zur Charakterisierung eines Objekts in einer Umgebung eines Kraftfahrzeugs mittels eines Assistenzsystems des Kraftfahrzeugs, bei welchem das Kraftfahrzeug relativ zu dem Objekt bewegt wird und mit einem Ultraschallsensor des Assistenzsystems fortwährend Ultraschallsignale ausgesendet werden, wobei Echos der von dem Objekt reflektierten Ultraschallsignale empfangen werden, wobei mittels einer Steuereinrichtung jeweilige Amplituden der empfangenen Echos bestimmt werden und eine Klassifizierung einer Höhe des Objekts basierend auf den Amplituden ermittelt wird, wobei die Klassifizierung der Höhe des Objekts anhand einer ermittelten ersten Amplitudenänderung durch Vergleichen einer ersten Amplitude eines ersten Echos eines ersten reflektierten Ultraschallsignals mit einer zweiten Amplitude eines zweiten Echos eines zweiten reflektierten Ultraschallsignals, das nach dem ersten Echo empfangen wurde, ermittelt wird, wobei die Klassifizierung der Höhe des Objekts anhand eines Vergleichs der ersten Amplitudenänderung mit einer zweiten Amplitudenänderung ermittelt wird, und dass die zweite Amplitudenänderung durch Vergleichen einer dritten Amplitude eines dritten Echos eines dritten reflektierten Ultraschallsignals, das nach dem zweiten Echo empfangen wurde, mit der zweiten Amplitude des zweiten Echos oder mit einer vierten Amplitude eines vierten Echos eines vierten reflektierten Ultraschallsignals, das nach dem zweiten Echo und vor dem dritten Echo empfangen wurde, ermittelt wird.

2. Verfahren (100) nach Anspruch 1, **dadurch gekennzeichnet, dass** es sich bei dem ersten Echo und dem zweiten Echo um zeitlich aufeinanderfolgende Echos handelt.

3. Verfahren (100) nach Anspruch 1 oder 2, **dadurch gekennzeichnet, dass** sich das Objekt in einem Nahbereich des Kraftfahrzeugs befindet, vorzugsweise in einer Entfernung von bis zu zwei Metern zum Ultraschallsensor des Kraftfahrzeugs, dass bei einer Annäherung des Kraftfahrzeugs an das Objekt das Objekt als niedrig klassifiziert wird, falls als erste Amplitudenänderung eine Amplitudenabnahme im zeitlichen Verlauf ermittelt wird, und dass das Objekt als hoch klassifiziert wird, falls als erste Amplitudenänderung eine Amplitudenzunahme im zeitlichen Verlauf ermittelt wird.

4. Verfahren (100) nach einem der vorhergehenden Ansprüche, **dadurch gekennzeichnet, dass** bei einer Annäherung des Kraftfahrzeugs an das Objekt das Objekt als niedrig klassifiziert wird, falls als erste Amplitudenänderung eine Amplitudenzunahme im zeitlichen Verlauf und als zweite Amplitudenänderung eine Amplitudenabnahme im zeitlichen Verlauf ermittelt wird.

5. Verfahren (100) nach einem der Ansprüche 1 bis 3, **dadurch gekennzeichnet, dass** sich das Objekt in einem Nahbereich des Kraftfahrzeugs befindet, vorzugsweise in einer Entfernung von bis zu zwei Metern zum Ultraschallsensor des Kraftfahrzeugs, dass bei einer Annäherung des Kraftfahrzeugs an das Objekt das Objekt als niedrig klassifiziert wird, falls als erste Amplitudenänderung und als zweite Amplitudenänderung jeweils eine Amplitudenabnahme im zeitlichen Verlauf ermittelt wird, und falls zusätzlich die zweite Amplitudenänderung größer ist als die erste Amplitudenänderung.

6. Verfahren (100) nach einem der vorhergehenden Ansprüche, **dadurch gekennzeichnet, dass** sich das Objekt in einem Nahbereich des Kraftfahrzeugs befindet, vorzugsweise in einer Entfernung von bis zu zwei Metern zum Ultraschallsensor des Kraftfahrzeugs, dass bei einer Annäherung des Kraftfahrzeugs an das Objekt das Objekt als hoch klassifiziert wird, falls als erste Amplitudenänderung und als zweite Amplitudenänderung jeweils eine Amplitudenzunahme im zeitlichen Verlauf ermittelt wird, und falls zusätzlich die zweite Amplitudenänderung größer ist als die erste Amplitudenänderung.

7. Verfahren (100) nach einem der vorhergehenden Ansprüche, **dadurch gekennzeichnet, dass** die Klassifizierung der Höhe des Objekts ermittelt wird, wenn zusätzlich die erste Amplitudenänderung betragsmäßig oberhalb eines vorgegebenen Schwellenwerts liegt.

8. Verfahren (100) nach Anspruch 7, **dadurch gekennzeichnet, dass** der Schwellenwert in Abhängigkeit von einer aktuellen Geschwindigkeit des Kraftfahrzeugs und/oder einer Temperatur in der Umgebung des Kraftfahrzeugs und/oder einer Luftfeuchtigkeit in der Umgebung des Kraftfahrzeugs und/oder einer Einbauhöhe des Ultraschallsensors an dem Kraftfahrzeug vorbestimmt wird.

9. Verfahren (100) nach einem der vorhergehenden Ansprüche, **dadurch gekennzeichnet, dass** der Vergleich der Amplituden auf einer Differenz und/oder einem Verhältnis der Amplituden basiert.

10. Verfahren (100) nach einem der vorhergehenden Ansprüche, **dadurch gekennzeichnet, dass** der Vergleich der Amplitudenänderungen auf einer Differenz und/oder einem Verhältnis der Amplitudenänderungen basiert.

11. Verfahren (100) nach einem der vorhergehenden Ansprüche, **dadurch gekennzeichnet, dass** das Verfahren bei einem assistierten und/oder semi-automatischen und/oder automatischen Einparkverfahren angewendet wird.

12. Verfahren (100) nach einem der vorhergehenden Ansprüche, **dadurch gekennzeichnet, dass** die Klassifizierung der Höhe des Objekts ausschließlich auf Sensordaten des Ultraschallsensors basiert.

13. Assistenzsystem mit einem Ultraschallsensor und einer Steuereinrichtung, welche zum Durchführen eines Verfahrens (100) nach einem der vorhergehenden Ansprüche ausgelegt ist.

## Claims

1. A method (100) for characterising an object in an environment of a motor vehicle by means of an assistance system of the motor vehicle, in which the motor vehicle is moved relative to the object and ultrasound signals are continuously emitted by means of an ultrasonic sensor of the assistance system, wherein echoes of the ultrasound signals reflected by the object are received, wherein respective amplitudes of the received echoes are determined by means of a control device, and a classification of a height of the object is determined on the basis of the amplitudes, wherein the classification of the height of the object is determined on the basis of a determined first change in amplitude by comparing a first amplitude of a first echo of a first reflected ultrasound signal with a second amplitude of a second echo of a second reflected ultrasound signal received after the first echo, wherein the classification of the height of the object is determined on the basis of a comparison of the first change in amplitude with a second change in amplitude, and in that the second change in amplitude is determined by comparing a third amplitude of a third echo of a third reflected ultrasonic signal received after the second echo with the second amplitude of the second echo or with a fourth amplitude of a fourth echo of a fourth reflected ultrasound signal which was received after the second echo and before the third echo.

2. The method (100) as claimed in claim 1, **characterised in that** the first echo and the second echo are temporally successive echoes.

3. The method (100) as claimed in claim 1 or 2, **characterised in that** the object is located in a proximity of the motor vehicle, preferably at a distance of up to two metres from the ultrasonic sensor of the motor vehicle, **in that**, when the motor vehicle approaches the object, the object is classified as low if a decrease in amplitude over time is determined as the first change in amplitude, and **in that** the object is classified as high if an increase in amplitude over time is determined as the first change in amplitude.

4. The method (100) as claimed in any one of the preceding claims, **characterised in that**, when the motor vehicle approaches the object, the object is classified as low if an increase in amplitude over time is determined as the first change in amplitude and a decrease in amplitude over time is determined as the second change in amplitude.

5. The method (100) as claimed in any one of claims 1 to 3, **characterised in that** the object is located in a proximity of the motor vehicle, preferably at a distance of up to two metres from the ultrasonic sensor of the motor vehicle, and **in that**, when the motor vehicle approaches the object, the object is classified as low if a decrease in amplitude over time is determined in each case as the first change in amplitude and as the second change in amplitude, and if, additionally, the second change in amplitude is greater than the first change in amplitude.

6. The method (100) as claimed in any one of the preceding claims, **characterised in that** the object is located in a proximity of the motor vehicle, preferably at a distance of up to two metres from the ultrasonic sensor of the motor vehicle, and **in that**, when the motor vehicle approaches the object, the object is classified as high if in each case an increase in amplitude over time is determined as the first change in amplitude and as the second change in amplitude, and if, additionally, the second change in amplitude is greater than the first change in amplitude.

7. The method (100) as claimed in any one of the preceding claims, **characterised in that** the classification of the height of the object is determined if, in addition, the amount of the first change in amplitude lies above a predefined threshold value.

8. The method (100) as claimed in claim 7, **characterised in that** the threshold value is predetermined depending on a current speed of the motor vehicle and/or a temperature in the environment of the motor vehicle and/or an air humidity in the environment of the motor vehicle and/or an installation height of the ultrasonic sensor on the motor vehicle.

9. The method (100) as claimed in any one of the preceding claims, **characterised in that** the comparison of the amplitudes is based on a difference and/or a ratio of the amplitudes.

10. The method (100) as claimed in any one of the preceding claims, **characterised in that** the comparison of the changes in amplitude is based on a difference and/or a ratio of the changes in amplitude.

11. The method (100) as claimed in any one of the preceding claims, **characterised in that** the method is applied during an assisted and/or semi-automatic and/or automatic parking method.

12. The method (100) as claimed in any one of the preceding claims, **characterised in that** the classification of the height of the object is based exclusively on sensor data from the ultrasonic sensor.

13. An assistance system having an ultrasonic sensor and a control device which is designed to carry out a method (100) as claimed in any one of the preceding claims.

## Revendications

1. Procédé (100) de caractérisation d'un objet dans un environnement d'un véhicule automobile au moyen d'un système d'assistance du véhicule automobile, dans lequel le véhicule automobile est déplacé par rapport à l'objet et dans lequel des signaux ultrasonores sont émis en continu par un capteur à ultrasons du système d'assistance, dans lequel des échos des signaux ultrasonores réfléchis par l'objet sont reçus, dans lequel les amplitudes respectives des échos reçus sont déterminées au moyen d'un dispositif de commande et une classification de la hauteur de l'objet est déterminée sur la base des amplitudes, dans lequel la classification de la hauteur de l'objet est déterminée sur la base d'une première variation d'amplitude déterminée, par comparaison d'une première amplitude d'un premier écho d'un premier signal ultrasonore réfléchi avec une deuxième amplitude d'un deuxième écho d'un deuxième signal ultrasonore réfléchi, reçu après le premier écho, dans lequel la classification de la hauteur de l'objet est déterminée sur la base d'une comparaison de la première variation d'amplitude avec une seconde variation d'amplitude et la seconde variation d'amplitude est déterminée par la comparaison d'une troisième amplitude d'un troisième écho d'un troisième signal ultrasonore réfléchi, reçu après le deuxième écho, avec la deuxième amplitude du deuxième écho ou avec une quatrième amplitude d'un quatrième écho d'un quatrième signal ultrasonore réfléchi, reçu après le deuxième écho et avant le troisième écho.

2. Procédé (100) selon la revendication 1, **caractérisé en ce que** le premier écho et le deuxième écho sont des échos consécutifs dans le temps.

3. Procédé (100) selon la revendication 1 ou 2, **caractérisé en ce que** l'objet se trouve dans une zone proche du véhicule automobile, de préférence à une distance maximale de deux mètres du capteur à ultrasons du véhicule automobile, **en ce que**, lors d'un rapprochement du véhicule automobile de l'objet, l'objet est classé comme bas si une diminution d'amplitude au cours du temps est déterminée comme première variation d'amplitude, et **en ce que** l'objet est classé comme haut si une augmentation d'amplitude au cours du temps est déterminée comme première variation d'amplitude.

4. Procédé (100) selon l'une des revendications précédentes, **caractérisé en ce que**, lors d'un rapprochement du véhicule automobile de l'objet, l'objet est classé comme bas si une augmentation d'amplitude au cours du temps est déterminée comme première variation d'amplitude et une diminution d'amplitude au cours du temps est déterminée comme seconde variation d'amplitude.

5. Procédé (100) selon l'une des revendications 1 à 3, **caractérisé en ce que** l'objet se trouve dans une zone proche du véhicule automobile, de préférence à une distance maximale de deux mètres du capteur à ultrasons du véhicule automobile, **en ce que**, lors d'un rapprochement du véhicule automobile de l'objet, l'objet est classé comme bas si une diminution d'amplitude au cours du temps est déterminée à la fois comme première variation d'amplitude et comme seconde variation d'amplitude, et si, en outre, la seconde variation d'amplitude est supérieure à la première variation d'amplitude.

6. Procédé (100) selon l'une des revendications précédentes, **caractérisé en ce que** l'objet se trouve dans une zone proche du véhicule automobile, de préférence à une distance maximale de deux mètres du capteur à ultrasons du véhicule automobile, **en ce que**, lors d'un rapprochement du véhicule automobile de l'objet, l'objet est classé comme haut si une augmentation d'amplitude au cours du temps est déterminée à la fois comme première variation d'amplitude et comme seconde variation d'amplitude, et si, en outre, la seconde variation d'amplitude est supérieure à la première variation d'amplitude.

7. Procédé (100) selon l'une des revendications précédentes, **caractérisé en ce que** la classification de la hauteur de l'objet est déterminée si, en outre, la première variation d'amplitude est supérieure en valeur absolue à un seuil prédéfini.

8. Procédé (100) selon la revendication 7, **caractérisé en ce que** le seuil est prédéterminé en fonction d'une vitesse actuelle du véhicule automobile et/ou d'une température dans l'environnement du véhicule automobile et/ou d'une humidité dans l'environnement du véhicule automobile et/ou d'une hauteur d'installation du capteur à ultrasons sur le véhicule automobile.

9. Procédé (100) selon l'une des revendications précédentes, **caractérisé en ce que** la comparaison des amplitudes est basée sur une différence et/ou un rapport des amplitudes.

10. Procédé (100) selon l'une des revendications précédentes, **caractérisé en ce que** la comparaison des variations d'amplitude est basée sur une différence et/ou un rapport des variations d'amplitude.

11. Procédé (100) selon l'une des revendications précédentes, **caractérisé en ce que** le procédé est appliqué lors d'une manœuvre de stationnement assistée et/ou semi-automatique et/ou automatique.

12. Procédé (100) selon l'une des revendications précédentes, **caractérisé en ce que** la classification de la hauteur de l'objet est basée exclusivement sur les données de capteur du capteur à ultrasons.

13. Système d'assistance comprenant un capteur à ultrasons et un dispositif de commande, configuré pour mettre en œuvre un procédé (100) selon l'une des revendications précédentes.
